# EUROPÄISCHE PATENTSCHRIFT

(11) **EP 0 811 827 B1**
(45) Veröffentlichungstag und Bekanntmachung des Hinweises auf die Patenterteilung: **02.07.2003**
(21) Anmeldenummer: 97106410.0
(22) Anmeldetag: 18.04.1997
(51) Int. Cl.: G01D 11/28, G12B 11/04

(54) **Zeigerkontaktierung mit selbstleuchtenden Zeigern**
Connecting device for dashboard with self-luminescent pointers
Dispositif de connexion pour tableau à aiguilles lumineuses

(30) Priorität: 04.06.1996 DE 19622383
(43) Veröffentlichungstag der Anmeldung: 10.12.1997
(73) Patentinhaber: ROBERT BOSCH GMBH, 70442 Stuttgart (DE)
(72) Erfinder: Sybrichs, Ralf, 71254 Ditzingen (DE)

(56) Entgegenhaltungen:
- DE-A- 4 341 783
- US-A- 5 050 045
- US-A- 5 372 087

## Beschreibung

### Stand der Technik

Die Erfindung geht von einer Kontaktierung selbstleuchtender Zeiger in Analoganzeigeninstrumenten nach der Gattung des Hauptanspruchs aus. Es ist bereits eine solche Kontaktierung aus der US 53 72 087 bekannt. Der elektrische Kontakt für die auf dem Zeiger platzierten Leuchtmittel wird über spiralförmig aufgerollte Kontaktstreifen erzeugt. Die Kontaktstreifen bestehen aus Kunststofffolien, auf die die Leiterbahnen aufgebracht werden. Eine Drehung des Zeigers im Zeigerinstrument führt dazu, dass die Spiralfolie enger aufgezogen wird. Die Kontaktierung mit einer solchen Spiralfolie zieht eine aufwendige Montage nach sich. Zudem ist der Drehmomentbedarf für die elektrische Verbindung über den gesamten Drehwinkel nicht konstant.

Aus der DE 43 41 783 Al ist eine Vorrichtung zur Kontaktierung eines in seinem Innern eine Lichtquelle aufweisenden Zeigers mit einer Stromzufuhr bekannt. In einer ersten Ausführungsform ist die Stromzuführungsvorrichtung als eine Spiralfeder ausgeführt, bei der ein Ende an einem Kontaktstift an eine äußere Metallhülse angeschlagen und ein unbefestigter Teil in Richtung des Zeigers herausragt. In einer anderen Ausführungsform ist eine flexible Leiterplatte spiralförmig um eine Drehachse angeordnet und kontaktiert sowohl den Zeiger, als auch eine äußere Hülse.

### Vorteile der Erfindung

Die erfindungsgemäße Kontaktierung mit den kennzeichnenden Merkmalen des Hauptanspruchs hat demgegenüber den Vorteil, dass durch die Ausbildung des Kontaktstreifens eine einfache Montage möglich wird. Durch die in den Unteransprüchen aufgeführten Maßnahmen sind weitere vorteilhafte Weiterbildungen und Verbesserungen des im Hauptanspruch angegebenen Kontaktierungsverfahrens möglich. Besonders vorteilhaft ist, dass der Kontaktierungsstreifen im Idealfall kein Drehmoment auf den Zeiger ausübt, das ansonsten vom Messwerk aufgebracht werden müsste.
Daher hat der Kontaktstreifen vorteilhafterweise eine Kreisringform.
Im weiteren ist auch die Herstellung des Kontaktierungsstreifens durch einfaches Aufbringen der Leiterzüge vorteilhaft. Die Leiterzüge werden dabei vorzugsweise durch Ätzen einer auflaminierten Kupferfolie oder durch einen Druck mit einer leitfähigen Paste hergestellt.
Die Beleuchtungsmittel werden am einfachsten direkt auf den Kontakten befestigt. Äußerst günstig ist es, Leuchtfolie für die Beleuchtung des Zeigers einzusetzen.

### Zeichnung

Ein Ausführungsbeispiel der Erfindung ist in den Zeichnungen dargestellt und in der nachfolgenden Beschreibung näher erläutert. Es zeigen Figur 1 in Aufsicht die erfindungsgemäße Folie. Figur 2 zeigt den aufgesetzten Zeiger in einer Position von 270°, Figur 3 den aufgesetzten Zeiger in der Position 0° und Figur 4 einen Schnitt durch die Nabe des Zeigers.

### Beschreibung des Ausführungsbeispiels

In modernen Kraftfahrzeugen sind die Kombiinstrumente in Durchlichttechnik ausgeführt, d. h. die Zifferblätter der Analoganzeigen werden von hinten beleuchtet, sodaß sich die Ziffern, hell erleuchtet, gut von der Umgebung abheben. Das Licht zur Beleuchtung der Zeiger wird im Nabenbereich eingekoppelt. Bei besonderen Ausführungsformen, z. B. der "Blackscreen"-Technik, reicht die Leuchtkraft der auf diese Art beleuchteten Zeiger nicht aus. Die "Blackscreen"-Technik bedeutet, daß dunkel getönte Deckscheiben benutzt werden, sodaß bei abgeschalteter Kombibeleuchtung die Anzeigen hinter der Deckscheibe nicht mehr zu erkennen sind. Die erforderliche Leuchtdichte der Zeiger läßt sich nur teilweise dadurch erreichen, daß man Leuchtmittel direkt in den Zeiger einbaut. Ein großes Problem ist dabei die elektrische Verbindung zwischen den sich mit der Meßwerkachse bewegenden Leuchtmittel und der feststehenden Umgebung, im allgemeinen der Leiterplatte.

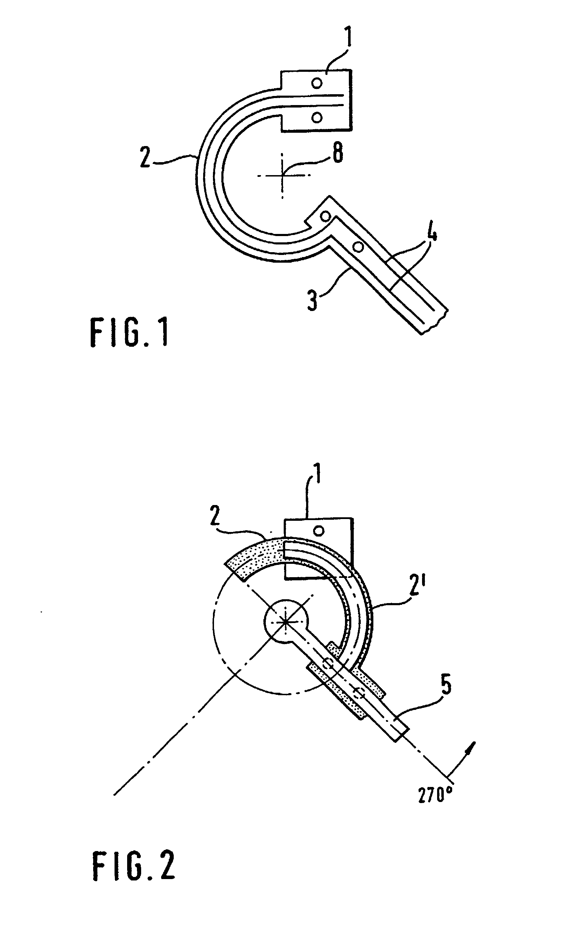

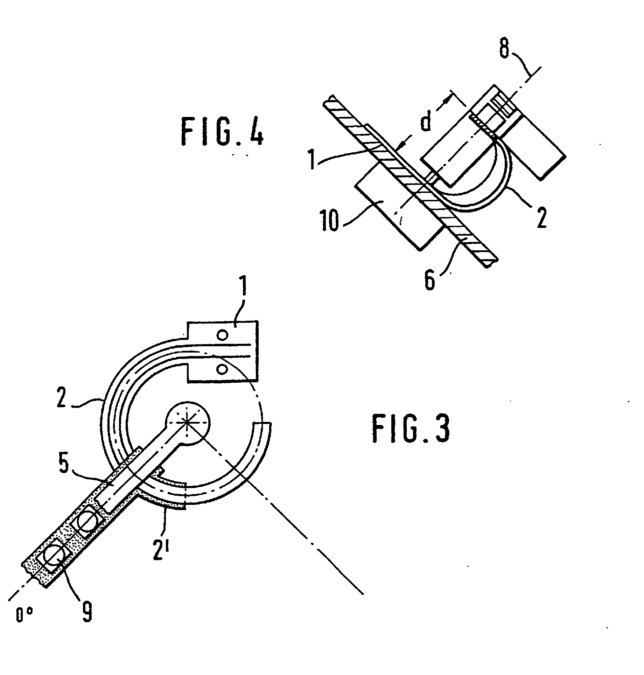

Die Drehachse 8 des Zeigers im Kombiinstrument wird vom Meßwerk 10 vorgegeben, das auf einer Trägerplatte sitzt, die z. B. die Leiterplatte sein kann. Der Kontaktierungsstreifen 2 muß die Distanz d von der Trägerplatte 6 bis zum Zeiger 5 überwinden. Dazu wird die Form des Trägerstreifens in einer ersten Ausführungsform nach Figur 1 gewählt. In 1 befinden sich die Befestigungen des Kontaktstreifens. Der Bereich 2 des Trägerstreifens ist kreisringförmig ausgebildet, 3 sind die Befestigungspunkte des Kontaktstreifens am Zeiger. Der Kontaktstreifen wird beispielsweise aus einem etwa 50 µm dicken Basismaterial hergestellt, auf dem eine Struktur aufgebracht wird. Das Material kann z.B. eine Polyamidfolie sein. Die Struktur der Leiterzüge kann durch Ätzen einer auflaminierten Kupferfolie oder durch den Druck mit einer leitfähigen Paste hergestellt werden. Die Struktur der Leiterzüge sollte im Biegebereich durch eine gleichartige Folie abgedeckt werden, damit die Leiterzüge in der neutralen Faser liegen. Um den Kontakt mit dem Zeiger herzustellen, müssen die Befestigungspunkte 3 am Zeiger befestigt werden. Dazu wird die Folie, die mit den Punkten 1 auf der Trägerplatte befestigt ist, an den Punkten 3 um 180° verdreht, so dass ihre Rückseite im Bereich der Befestigungspunkte 3 nach oben liegt. Gleichzeitig muss die Folie im Bereich des Befestigungspunkts 3 um die Distanz d angehoben werden, damit sie am Zeiger 5 befestigt werden kann. Die Situation stellt sich in Figur 2 dar. Die Befestigungspunkte 1 liegen auf der Trägerplatte selbst, die Sichelstruktur 2 des Kontaktstreifens biegt sich zuerst nach links und wird in einem U gebogen nach rechts weitergeführt. Der Bereich 2', dunkler markiert, stellt die Rückseiten des Kontaktstreifens dar.
Verfolgt man die Drehrichtung des Zeigers jetzt aus dieser 270°-Position in die Position 0°, wie sie in Figur 3 dargestellt wird, erkennt man, dass sich die Folie 2 auf einem Kreissegment abrollt. Nur noch im Bereich 2' blickt man in dieser Aufsicht auf die Rückseite der Kontaktfolie. In einem Schnittbild nach Figur 4 erkennt man, wie die Folie 2 räumlich angeordnet ist. Die Folie bildet dabei während der Drehung ein weniger oder stärker ausgebildetes U-Profil. Auf dem Zeiger 5 werden die Leuchtmittel 9 installiert und mit den Leiterzügen 4 elektrisch verbunden. Der elektrische Kontakt an den Verbindungspunkten 1 auf der Leiterplatte wird hergestellt.

Die Folie kann sich über den gesamten Zeiger erstrecken und die Leuchtmittel können direkt auf den Kontaktbahnen der Folie kontaktiert werden.

Eine weitere Ausführungsform verwendet für die Beleuchtung eine Leuchtfolie, so dass keine gesonderten Leuchtmittel mehr im Zeiger angebracht werden müssen. Dabei kommt eine Folie zur Anwendung, die mit einer Substanz beschichtet ist, die beim Anlegen einer geeigneten, elektrischen Spannung zum Leuchten angeregt wird. Diese Beschichtung kann sich dabei nur auf den Bereich des Zeigers erstrecken. Bei Verwendung einer solchen speziell konfektionierten Folie erfolgt die elektrische Kontaktierung und die Beleuchtung des Zeigers über dasselbe Medium.

## Patentansprüche

1. Selbstleuchtender Zeiger in einem Analogzeigerinstrument mit einer Zeigerachse und einem Mittel zur Herstellung eines elektrischen Kontakts (2, 4) zwischen den feststehenden Bereichen einer Trägerplatte (6) und den Leuchtmitteln auf dem Zeiger, die zur Beleuchtung des Zeigers (5) dienen, **dadurch gekennzeichnet, dass** der elektrische Kontakt von einem Kontaktstreifen (2) hergestellt wird, der kreisringfömüg oder sichelförmig ausgebildet ist, und der auf einer Trägerplatte (6) und an dem Zeiger (5) derart befestigt ist, dass der Kontaktstreifen (2) zwischen der Trägerplatte (6) und dem Zeiger (5) U-förmig gebogen ist.

2. Selbstleuchtender Zeiger nach Anspruch 1, **dadurch gekennzeichnet, dass** der Kontaktstreifen (2) bei einer Zeigerdrehung eine Walkbewegung entlang einer Kreisbahn zwischen dem Zeiger (5) und der Trägerplatte (6) ausführt.

3. Selbstleuchtender Zeiger nach einem der vorherigen Ansprüche, **dadurch gekennzeichnet, dass** der Kontaktstreifen (2) auf ein Basismaterial aufgebrachte Leiterzüge (4) aufweist.

4. Selbstleuchtender Zeiger nach einem der vorherigen Ansprüche, **dadurch gekennzeichnet, dass** zumindest ein Teil des Kontaktstreifens (2) eine Leuchtfolie (9) ist, die mit einer Substanz beschichtet ist, die durch Anlegen einer geeigneter elektrischen Spannung zum Leuchten angeregt werden kann.

5. Selbstleuchtender Zeiger nach einem der vorherigen Ansprüche, **dadurch gekennzeichnet, dass** die Trägerplatte (6) eine Leiterplatte ist.

## Claims

1. Self-luminous pointer in an analogue pointer-type instrument having a pointer axis and a means for producing an electric contact (2, 4) between the fixed regions of the carrier plate (6) and the illuminants on the pointer which serve the purpose of illuminating the pointer (5), **characterized in that** the electric contact is produced by a contact strip (2) which is of an annular or sickle-shaped design and which is fastened on the carrier plate (6) and on the pointer (5) in such a way that the contact strip (2) is bent in the shape of a U between the carrier plate (6) and the pointer (5).

2. Self-luminous pointer according to Claim 1, **characterized in that** the contact strip (2) executes a tumbling movement along a circular track between the pointer (5) and the carrier plate (6) in the event of a pointer rotation.

3. Self-luminous pointer according to one of the preceding claims, **characterized in that** the contact strip (2) has conductor tracks (4) applied to a base material.

4. Self-luminous pointer according to one of the preceding claims, **characterized in that** at least one part of the contact strip (2) is a lighting film (9) which is coated with a substance which can be excited to illuminate by applying a suitable electric voltage.

5. Self-luminous pointer according to one of the preceding claims, **characterized in that** the carrier plate (6) is a printed circuit board.

## Revendications

1. Aiguille luminescente dans un instrument analogique à aiguille comprenant un axe d'aiguille et un moyen pour produire un contact électrique (2, 4) entre les zones fixes d'une plaque de support (6) et les moyens d'éclairage sur l'aiguille qui servent à éclairer l'aiguille (5),
**caractérisée en ce que**
le contact électrique est produit par une bande de contact (2) conçue sous forme d'anneau de cercle ou de faucille fixé sur une plaque de support (6) et à l'aiguille (5), de telle manière que la bande de contact (2) est recourbée en U entre la plaque de support (6) et l'aiguille (5).

2. Aiguille luminescente selon la revendication 1,
**caractérisée en ce que**
la bande de contact (2) décrit un mouvement de roulement entre l'aiguille (5) et la plaque de support (6) le long d'une trajectoire circulaire lorsque l'aiguille tourne.

3. Aiguille luminescente selon l'une des revendications précédentes,
**caractérisée en ce que**
la bande de contact (2) présente des segments conducteurs (4) appliqués sur un matériau de base.

4. Aiguille luminescente selon l'une des revendications précédentes,
**caractérisée en ce qu'**
au moins une partie de la bande de contact (2) est une feuille lumineuse (9) revêtue d'une substance qui peut être excitée en appliquant une tension électrique adaptée pour éclairer.

5. Aiguille luminescente selon l'une des revendications précédentes,
**caractérisée en ce que**
la plaque de support (6) est une plaquette de circuits imprimés.
